(19) Europäisches Patentamt
European Patent Office
Office européen des brevets

(11) EP 0 319 938 B1

(12) **EUROPÄISCHE PATENTSCHRIFT**

(45) Veröffentlichungstag und Bekanntmachung des Hinweises auf die Patenterteilung:
**08.05.1996 Patentblatt 1996/19**

(51) Int Cl.$^6$: **C08B 15/00**, C08B 37/08, A61M 1/16, B01D 15/00

(21) Anmeldenummer: **88120408.5**

(22) Anmeldetag: **07.12.1988**

(54) **Modifizierte Cellulose für biocompatible Dialysemembranen**

Modified cellulose for biocompatible dialysis membranes

Cellulose modifiée pour des membranes de dialyse biocompatibles

(84) Benannte Vertragsstaaten:
**AT BE CH DE ES FR GB GR IT LI LU NL SE**

(30) Priorität: **11.12.1987 DE 3742071**

(43) Veröffentlichungstag der Anmeldung:
**14.06.1989 Patentblatt 1989/24**

(73) Patentinhaber: **Akzo Nobel N.V.**
**NL-6824 BM Arnhem (NL)**

(72) Erfinder:
- **Diamantoglou, Michael, Dr.**
**D-8765 Erlenbach/Main (DE)**
- **Kuhne, Helmut, Dr.**
**D-5166 Kreuzau (DE)**

(74) Vertreter: **Fett, Günter**
**Akzo Patente GmbH,**
**Postfach 10 01 49**
**D-42097 Wuppertal (DE)**

(56) Entgegenhaltungen:
**US-A- 1 833 286** **US-A- 2 136 299**
- **PATENT ABSTRACTS OF JAPAN, Band 8, Nr. 246 (C-251), 10. November 1984; & JP-A-59 125 908**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft Cellulosederivate, die durch homogene Umsetzung in Dimethylacetamid und Lithiumchlorid herstellbar sind.

Aus der US-PS 4 278 790 sind Celluloselösungen unter Verwendung von Lithiumchlorid und Dimethylacetamid als Lösungsmittel bekannt. Die Lösungen können bis zu 8 % Lithiumchlorid und bis zu etwa 3 % Cellulose enthalten. In diesen Celluloselösungen können auch Cellulosederivate hergestellt werden. Gemäß der US-Patentschrift werden die Lösungen in der Weise hergestellt, daß in ein Gemisch von Dimethylacetamid und Lithiumchlorid Cellulose eingetragen und zunächst für eine längere Zeit auf etwa 150 °C erhitzt wird. Später wird die dann gebildete Lösung unter Rühren auf Raumtemperatur abgekühlt.

Außerdem sind aus der DE-OS 33 12 022 sowie der DE-OS 32 46 417 wasserunlösliche Fasern aus Celluloseestern bekannt. Sie weisen ein extrem hohes Adsorptionsvermögen für Wasser und physiologische Flüssigkeiten auf. Das mag für manche Einsatzgebiete ein Vorteil sein, für viele ist es jedoch ein Nachteil.

Aus der DE-PS 27 05 735 ist eine Dialysemembran für die Hämodialyse mit daran chemisch gebundenen antithrombogenen Verbindungen bekannt, wobei die Dialysemembran aus zwei oder mehreren Schichten einer aus Cuoxamcelluloselösungen regenerierten Cellulose besteht, die jeweils aus getrennt gespeisten Schlitzen einer Spinndüse erhalten worden ist, die antithrombogene Wirkstoffe chemisch gebunden enthält.

Es ist aber auch bereits in der DE-OS 17 20 087 vorgeschlagen worden, dadurch daß das Polymermaterial der Membran mit einem Alkylhalogenid umgesetzt und danach das erhaltene Material mit einem Alkalisalz einer antithrombogenen Verbindung mit kationischem Rest (z.B. Heparin oder eine Heparinoidverbindung) umgesetzt wird, die Gefahr der Gerinnung des Blutes zu verringern. Zu den möglichen Alkylhalogeniden werden dabei auch Halogenalkyldialkylamine gerechnet. Auch Cellulose, jedoch im wesentlichen Celluloseacetat, zählt zu den möglichen Polymeren.

Eine antithrombogene Wirkung dieser bekannten Dialysemembranen wird nur beobachtet, wenn der Substitutionsgrad der modifizierten Cellulose hoch ist, d.h. größer als mindestens 0,1 und in einem gesonderten Schritt eine Vorheparinisierung mit relativ hoher Heparinkonzentration (0,1 bis 1 Gew.%-ige Lösungen) durchgeführt wird.

JP-A-59-125 908 beschreibt Dialysemembranen, hergestellt durch Lösung von Chitin in DMAc/LiCl, Extrudieren und Verspinnen. Das darin eingesetzte Cellulosederivat unterscheidet sich von den in der vorliegenden Anmeldung beanspruchten durch den fehlenden und weiter unten definierten Rest Q und durch den fehlenden und weiter unten definierten Rest (X-Y) am Stickstoff- bzw. Schwefelatom. Aussagen über die Biokompatibilität der in dieser Druckschrift hergestellten Membranen werden darin nicht gemacht.

Aus der DE-OS 35 24 596 ist bereits eine Dialysemembran mit verbesserter Biocompatibilität bekannt, die sich dadurch auszeichnet, daß der mittlere Substitutionsgrad einer modifizierten Cellulose 0,02 bis 0,07 beträgt. Vorzugsweise enthält die bekannte Dialysemembran aus modifizierter Cellulose solche modifizierte Cellulose, die eine durch die Formel

Cellulose-R'-X-Y

wiedergegebene Struktur aufweist, wobei

X für -NR"- und/oder

$$-\overset{\oplus}{N}R''_2-$$

und/oder -S- und/oder -SO- und/oder $-SO_2-$ und/oder

$$\begin{array}{c}-C-N-\\ \|\quad |\\ O\quad R\end{array}$$

und/oder -CO-O- und/oder -O-,

Y für -R und/oder $-NR_2$ und/oder $-Si(OR'')_3$ und/oder $-SO_3H$ und/oder -COOH und/oder $-PO_3H_2$ und/oder

$$-\overset{\oplus}{N}HR_2$$

bzw. deren Salze,

R' für eine Alkylengruppe und/oder Cycloalkylengruppe und/oder Arylengruppe mit insgesamt 1 bis 25 C-Atomen,

R" für ein Wasserstoffatom oder R und

R für eine Alkylgruppe mit 1 bis 5 C-Atomen und/oder eine Cycloalkylgruppe und/oder Arylgruppe steht.

Diese bekannte Dialysemembran war bereits in der Lage, Blutgerinnung, Leucopenie und Komplementaktivierung in erheblichem Umfange zu reduzieren. Eine Adsorption von Beta-2-Mikroglobulin konnte jedoch in nennenswertem Umfange nicht festgestellt werden.

In der deutschen Patentanmeldung P 37 23 897.3 sind Cellulosederivate beschrieben mit der allgemeinen Formel

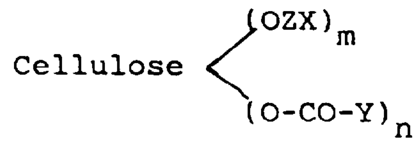

worin -Z- einen gegebenenfalls substituierten Alkylen-, Alkenylen-, Alkinylen-, Cycloalkylen- oder Benzylen- oder Xylylenrest,
X -H, $-NR_2$, $-NR_3^+$, -CN, -COOH, $-SO_3H$, $-PO(OR)_2$, $-CONR_2$ oder $-Si(OR)_3$ bedeutet,
wobei R ein Wasserstoffatom oder eine Alkyl- oder Alkenylgruppe mit 1 bis 25 C-Atomen, Cycloalkyl-, Toluyl- oder Phenylgruppe bedeutet

und

Y eine gegebenenfalls substituierte Alkyl-, Alkenyl-, Alkinylgruppe mit 1 bis 36 C-Atomen, eine Cycloalkylgruppe oder eine Phenyl-, Toluyl-oder Benzylgruppe oder ein

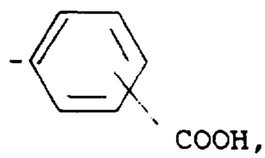

$-(CH_2)_r-COOH$,

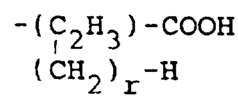

oder (-CH=CH-COOH) oder NH-R -Rest ist und R die gleiche Bedeutung hat

und

r = 1 - 20
m = 0 - 2,5
n = 0,2 bis 2,95
mit der Maßgabe, daß bei m = o n $\geq$ 1,55 ist,
wenn Y ein Alkyl-Rest mit 1 - 5 C-Atomen, ein $-(CH_2)_r-COOH$-Rest mit r = 0, 1 oder 2 oder ein Rest der Phthalsäure ist,

sowie der Polymerisationsgrad mehr als 400 beträgt und herstellbar ist durch homogene Umsetzung in einem Gemisch von Dimethylacetamid und/oder N-Methylpyrrolidon mit LiCl nach Aktivierung des Celluloseausgangsproduktes ohne Anwesenheit von LiCl,

deren Herstellung und deren Verwendung zu Membranen und Fasern.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei Dialysemembranen aus regenerierter Cellulose häufig bei der Behandlung eines Nierenkranken mit Dialysatoren mit Cellulose-Membranen in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/$mm^3$.

Die Leukopenie bei der Dialyse ist am stärksten ausgeprägt 15 bis 20 Min. nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff, 1983 und D.E. Chenoweth, Asaio-Journal Vol. 7, Seite 44 ff, 1984.

Das Carpal-Tunnel-Syndrom wird durch modifizierte Cellulosederivate beeinflußt. Es besteht aber ein erhebliches Bedürfnis nach weiteren Modifizierungen der Cellulose, um auch dieses Phänomen möglichst weitgehend auszuschalten.

Aufgabe der vorliegenden Erfindung war es, modifizierte Cellulose zur Verfügung zu stellen, die hinsichtlich der Leukopenie, der Komplementaktivierung und der Blutgerinnung Membranen optimale Eigenschaften verleiht und darüber hinaus das für den Carpal-Tunnel-Effekt verantwortliche Beta-2-Microglobulin in erheblichem Umfange zu adsorbieren in der Lage ist.

Gelöst wird diese Aufgabe durch eine modifizierte Cellulose, die dadurch gekennzeichnet ist, daß sie eine durch die Formel

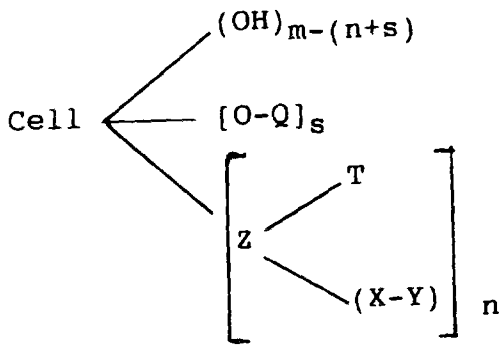

wiedergegebene Struktur aufweist, worin Cell das Gerüst des unmodifizierten Cellulosemoleküls oder des Chitinmoleküls jeweils ohne Hydroxylgruppen darstellt,

Z ein Stickstoff- oder Schwefelatom ist, wobei für den Fall, daß Z ein Stickstoffatom ist, T und Z zusammen eine Acylamid- oder Harnstoffgruppe bilden, in der der Acylrest oder Amidrest T die Bedeutung des Acylrestes oder Amidrestes von Q hat, und für den Fall, daß Z ein Schwefelatom ist, T entfällt,

X einen geradkettigen oder verzweigten Alkylen - und/oder Alkenylenrest und/oder einen Cycloalkylen- und/oder Arylen- und/oder Arylalkylenrest darstellt, die gegebenenfalls substituiert sein können,

Y -H und/oder $-NR_2$ und/oder $-N^+R_3$ und/oder -COOR und/oder $-CO-NR_2$ und/oder -CO-R und/oder -CS-R und/oder $-SO_3R$ und/oder $-SO_2R$ und/oder $-SO_2NR_2$ und/oder -SR und/oder $-PO(OR)_2$ und/oder $-PO(NR)_2$ und/oder -CN und/oder -OR und/oder Halogen und/oder $-Si(OR)_3$ bedeuten, worin

R ein Wasserstoffatom und/oder eine geradkettige oder verzweigte Alkyl- und/oder Alkenylgruppe mit 1 bis 36 C-Atomen und/oder eine Cycloalkyl- und/oder Aryl- und/oder Arylalkylgruppe ist, wobei die genannten organischen Reste R gegebenenfalls substituiert sein können und bei R=H die unsubstituierte Säuregruppe in Y in den Fällen

-COOH, $-SO_3H$ und $-PO_3H_2$ auch in Salzform vorliegen kann,

Q mindestens einen Acylrest der Formel -CO-R' und/oder Amidrest der Formel $-CO-NR'_2$ darstellt, die zusammen mit dem O des Cellulosemoleküls eine Ester- und/oder eine Carbamatgruppe bilden, worin

R' die gleiche Bedeutung wie R und/oder Y hat,

m beim unmodifizierten Cellulosemolekül 3 und beim Chitinmolekül 2 beträgt,

(n+s) den mittleren Substitutionsgrad angibt und für

n und s die Ungleichungen O < n < m und O < s < m gelten.

Während unmodifizierte Cellulose 3 für eine Substitution zur Verfügung stehende Hydroxylgruppen enthält, ist bei Chitin bereits eine Hydroxylgruppe durch Acetamidgruppen substituiert. Diese Substitution wird im Rahmen der vorliegenden Erfindung beim mittleren Substitutionsgrad nicht mehr berücksichtigt, sofern modifizierte Cellulosen auf der Basis des Chitinmolekül-Gerüstes eingesetzt werden.

Wenn Z ein Stickstoffatom ist, beträgt s vorzugsweise>0 bis 0,5 . n. Wenn Z ein Schwefelatom ist, beträgt s vorzugsweise 0,25 . n bis n.

Dialysemembranen mit den erfindungsgemäßen Cellulosederivaten lassen sich aus substituierter Cellulose im Gemisch mit unmodifizierter Cellulose auf den gewünschten Substitutionsgrad einstellen. Die Substitution zum Zwischenprodukt erfolgt nach an sich bekannten Verfahren und anschließender Umsetzung dieses Zwischenproduktes mit Säureanhydriden, Säurechloriden oder Isocyanaten, beispielsweise in Dimethylacetamid/LiCl-Lösung.

Das in der US-PS 3 702 754 beschriebene Verfahren ist zur Herstellung der Zwischenprodukte geeignet, wenn darauf geachtet wird, daß der Abbau begrenzt bleibt. Sofern bei diesem Verfahren eine Vernetzung eintritt, sind die Produkte zum Teil unlöslich, so daß sie dann ungeeignet sind.

Andere bekannte Verfahren haben sich jedoch als besser geeignet zur Herstellung des Zwischenproduktes erwiesen. Beispielsweise kann hierzu auf Journal of Polymer Science - Part C, No. 11, (1965), Seiten 107 - 118 oder J. Am. Chem. Soc. Febr. 1950, Seiten 670 - 674 und auf "Cellulose and Cellulose Derivatives" Part II, herausgegeben von Ott, Spurlin und Grafflin, Interscience Publishers, Inc., New York, 2. Auflage, 1954, Seite 822 verwiesen werden. Bei diesen Verfahren wird der Substitutionsgrad beliebig hoch eingestellt.

Im Rahmen der vorliegenden Erfindung wurde die Komplement-Aktivierung anhand der Fragmente C3a oder C5a beurteilt. Dazu wurden in vitro 300 ml heparinisiertes Blutplasma über einen Zeitraum von 4 Std. mit einem Plasmafluß von 100 ml/min. durch einen Dialysator mit 1 $m^2$ effektiver Austauschfläche rezirkuliert. In dem Plasma wurden die C3a-Fragmente mit Hilfe der RIA-Methode (Upjohn-Test) bestimmt. Die relative Komplement-Aktivierung für den jeweiligen Meßzeitpunkt wurde durch Bildung des Verhältnisses der Konzentration zum Zeitpunkt der Probenahme mit dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die C3a-Fragmente bestimmt. Die C5a-Fragmente wurden analog bestimmt.

Die Erhöhung des beta-2-Mikroglobulinspiegels bei Langzeit-Dialysepatienten wird nach Verwendung von Membranen aus regenerierter Cellulose beobachtet und wird darauf zurückgeführt, daß diese Membranen für Stoffe im Molekularbereich von 1000 bis 20.000 weniger durchlässig sind und letztere deshalb bei der Dialyse nicht in ausreichendem Maße entfernt werden. An die üblichen Membranen aus regenerierter Cellulose adsorbiert sich das beta-2-Mikroglobulin nicht in nennenswertem Umfang. Hierzu aber können in unerwarteter Weise die erfindungsgemäßen Cellulosederivate beitragen.

Gemessen wird im Rahmen der Erfindung der beta-2-Mikroglobulingehalt, der an die Membran adsorbiert wird, auf folgende Weise:

In je 500 mg Substanz (Dialysemembran) werden 10 ml Humanblutplasma gegeben und 30 min. bei 37 °C inkubiert. Das Humanblutplasma hat einen Gehalt an beta-2-Mikroglobulin von 13,67 mg/l. Die Probe wird bei 3000 Upm 15 min. zentrifugiert. Im Überstand wird der Gehalt an beta-2-Mikroglobulin festgestellt. Anschließend wird die Probe 2 x mit je 10 ml Phosphat-buffer-saline gewaschen. In den Waschflüssigkeiten wird der Mikroglobulingehalt ebenfalls festgestellt. Aus der Differenz zwischen ursprünglichem und nicht absorbiertem beta-2-Mikroglobulin läßt sich die prozentuale Menge an absorbiertem beta-2-Mikroglobulin errechnen.

Der Durchschnittspolymerisationsgrad DP wurde in einer Cuen-Lösung nach DIN 54270 bestimmt.

Der Verätherungsgrad und/oder Veresterungsgrad wurden anhand der Analysenergebnisse bestimmt, die für die Substituenten bekannt und typisch sind, beispielsweise Stickstoff nach Kjeldahl, Schwefel nach Schöniger oder Phosphor nach der Molybdatmethode, gegebenenfalls aus der Differenz vor und nach einer Verseifung.

Gut geeignete Dialysemembranen ergeben sich bei modifizierten Cellulosen, sofern gegebenenfalls von substituierten X-Molekülresten ausgegangen wird, wenn X mit den Molekülresten Y substituiert sind.

Im allgemeinen sind modifizierte Cellulosen bevorzugt, bei denen die Substituenten Y sekundäre, tertiäre oder quaternäre Aminogruppen und/oder Carboxygruppen und/oder Sulfogruppen und/oder Phosphonatgruppen und/oder Silicatgruppen sind.

Gute Ergebnisse hinsichtlich der angestrebten Biocompatibilität erhält man mit Dialysemembranen, die modifizierte Cellulose enthalten, bei denen in der angegebenen Strukturformel -[ XY ] Dialkylaminoalkylen und/oder Carboxyalkylen und/oder Carboxyarylalkylen und/oder Sulfoalkylen und/oder Sulfoarylalkylen und/oder Phosphonatalkylen und/oder Phosphonatarylalkylen bedeutet.

Eine weitere Ausführungsform der Erfindung ergibt sich dadurch, daß -[ XY ] Silicatopropylen bedeutet.

Alkylreste für R sind vorzugsweise Methylgruppen und/oder Äthylgruppen und/oder Propylgruppen.

Im Rahmen der Erfindung ist es ohne Einschränkung möglich, die Regeneration beispielsweise aus Dimethylacetamid/LiCl durchzuführen, während die erfindungsgemäßen modifizierten Cellulosen, beispielsweise wegen ihrer Unlöslichkeit, für die Regeneration aus Cuoxamlösungen nicht geeignet sind.

Beispiel 1

In einem 2 l-Dreihalskolben wurden 83,175 g (0,50 Mol) Methylaminocellulose (n = 0,15) in 1006,4 g (11,57 Mol) Dimethylacetamid suspendiert und bei 145 °C 30 Minuten lang unter Stickstoff aktiviert. Nach dem Abkühlen auf 100 °C wurden 95,8 g (2,25 Mol) LiCl zugesetzt, wobei die Temperatur um 5 - 10 °C anstieg; anschließend wurde rasch auf Raumtemperatur (RT stets 20 - 25 °C) abgekühlt und über Nacht gerührt. Zur klaren Viskose-Lösung wurden 2 g (0,02 Mol) Kaliumacetat und 14,7 g (0,15 Mol) Maleinsäureanhydrid zugesetzt.

Zur Vervollständigung der Reaktion wurde das Reaktionsgemisch 6 Stunden bei 65 °C und 15 Stunden bei Raumtemperatur weitergerührt. Die erhaltene Reaktionslösung wurde filtriert, entlüftet und zu Hohlfäden versponnen.

Als Lumenfüllung wurde i-Propylmyristat verwendet.

Die auf diese Weise erhaltenen Methylaminocellullosemaleinat-Membranen wiesen folgende Eigenschaften auf:

| | |
|---|---|
| mittlerer Substitutionsgrad n + s): | 0,28 |
| Wanddicke: | 14 µm |
| Innendurchmesser: | 200 µm |
| Ultrafiltrationsrate: | 4,0 ml /h·m$^2$·mm Hg bei 37 °C |
| Vitamin B12-Permeabilität: | 4,8·10$^{-3}$ cm/min. bei 37 °C |
| Beta-2-Mikroglobulinadsorption: | 50 % |

Die obengenannte Cellulosederivatmembran weist im Vergleich zu unmodifizierten Cellulose-Membranen eine geringere Komplementaktivierung auf. Gegenüber der unmodifizierten Cellulosemembran beträgt die C3a-Reduzierung 98 %.

Beispiel 2

In einem 2 l-Dreihalskolben wurden 81 g (0,5 Mol) Cellulose in 1006,4 g (11,57 Mol) Dimethylacetamid suspendiert und bei 145 °C 30 Minuten lang unter Stickstoff aktiviert. Nach dem Abkühlen auf 100 °C wurden 95,8 g (2,25 Mol) LiCl zugesetzt, wobei die Temperatur um 5 - 10 °C anstieg; anschließend wurde rasch auf Raumtemperatur (RT stets 20 - 25 °C) abgekühlt und über Nacht gerührt. Zur klaren, viskosen Lösung wurden zunächst 40,4 g (0,4 Mol) Triäthylamin und nach Homogenisierung 47,625 g (0,25 Mol) p-Toluolsulfonsäurechlorid hinzugefügt, und zur Vervollständigung der Reaktion das Gemisch 24 Stunden bei 70 °C gerührt. Die Analyse einer kleinen Probemenge ergab einen Veresterungsgrad von 0,35. Zum Reaktionsgemisch wurden 151,5 g (1,50 Mol) Hexylamin zugesetzt. Zur Vervollständigung der Reaktion wurde das Gemisch 24 Stunden bei 80°C weitergerührt. Das Reaktiongemisch wurde mit Wasser ausgefällt, zunächst mit Wasser chloridfrei, dann mit Äthanol gewaschen und im Vakuum-Trockenschrank bei 65 °C getrocknet. Dabei wurden 92 g eines Produktes mit einem Stickstoffgehalt von 2,19 %, entsprechend einem Substitutionsgrad DS (n) von 0,30 erhalten.

Analog dem Beispiel 1 wurde das Reaktionsprodukt in DMAc/LiCl mit Dodecylbernsteinsäureanhydrid umgesetzt und zu Kapillar-Membranen verarbeitet. Die Kapillarmembranen wiesen folgende Eigenschaften auf:

| | |
|---|---|
| Mittlerer Substitutionsgrad (n + s): | 0,38 |
| Wanddicke: | 12 µm |
| Innendurchmesser: | 200 µm |
| Ultrafiltrationsrate: | 3,8 ml /h·m$^2$·mm Hg bei 37 °C |
| Vitamin B12-Permeabilität: | 4,1·10$^{-3}$ cm/min. bei 37 °C |
| Beta-2-Mikroglobulinadsorption: | 28 % |

Gegenüber der unmodifizierten Cellulosemembran beträgt die C3a-Reduktion 99 %.

Beispiel 3

Durch Veresterung von Carboxymethylthiocellulose (n = 0,12) mit Essigsäureanhydrid nach bekannter Verfahrensweise wurde ein Produkt mit einem Veresterungsgrad von s = 2,2 erhalten.

Das Produkt wurde in Ameisensäure-Polyethylenglykol-Wasser-Gemisch (82 : 11 : 7 Gewichtsteile) gelöst und zu Flachmembranen verarbeitet.

Im Vergleich zu unmodifizierter Cellulose beträgt die C5a-Reduktion 92%.

Beispiel 4 - 15

Analog dem Beispiel 1, 2 oder 3 wurden die in der Tabelle aufgeführten Derivate synthetisiert, zu Flachmembranen verarbeitet und ihre Komplementaktivierung anhand der Fragmente C5a bestimmt.

# Tabelle

| Beispiel | Ausgangspolymer | s | Q | Z | T | X - Y | n | C5a-Red. % |
|---|---|---|---|---|---|---|---|---|
| 4 | Cellulose | 0,30 | $COC_6H_4-COOH$ | N | =Q | $C_6H_{13}$ | 0,25 | 95 |
| 5 | Cellulose | 2,0 | $COC_2H_5$ | S | - | $CH_2-COOH$ | 0,10 | 98 |
| 6 | Cellulose | 1,5 | $COC_3H_7$ | S | - | $C_3H_6-SO_3H$ | 0,13 | 94 |
| 7 | Cellulose | 2.1 | $COCH_3/COC_6H_4-COOH$ | S | - | $C_2H_4OH$ | 0,05 | 96 |
| 8 | Cellulose | 0,25 | $CONHC_6H_5$ | S | - | $C_{12}H_{25}$ | 0,07 | 93 |
| 9 | Cellulose | 2,2 | $COCH_3/COCH_2CH(-SO_3H)-COOH$ | S | - | $C_6H_5$ | 0,04 | 91 |
| 10 | Cellulose | 2,0 | $COCH_3/COC_2H_5$ | S | - | $CH(-COOH)-CH_2COOH$ | 0,11 | 97 |
| 11 | Cellulose | 2,0 | $COCH_3$ | N | =Q | $C_5H_{10}-COOH$ | 0,07 | 80 |
| 12 | Cellulose | 0,10 | $COC_{17}H_{35}$ | S | - | $C_2H_4-COOH$ | 0,13 | 95 |
| 13 | Cellulose | 1.6 | $COC_3H_7$ | N | =Q | $C_{11}H_{22}-COOH$ | 0,06 | 90 |
| 14 | Chitin | 1,3 | $COCH_3$ | S | - | $CH_2-COOH$ | 0,12 | 98 |
| 15 | Chitin | 1,4 | $COC_2H_5$ | S | - | $CH_2-COOH$ | 0,11 | 99 |
| 16 | Celllulose | 2,1 | $CH_2COOH/COCH_3$ | S | - | $CH_2-COOH$ | 0,08 | 99 |

## Patentansprüche

**Patentansprüche für folgende Vertragsstaaten : AT, BE, CH, DE, FR, GB, GR, IT, LI, LU, NL, SE**

1. Modifizierte Cellulose, dadurch gekennzeichnet, daß sie eine durch die Formel

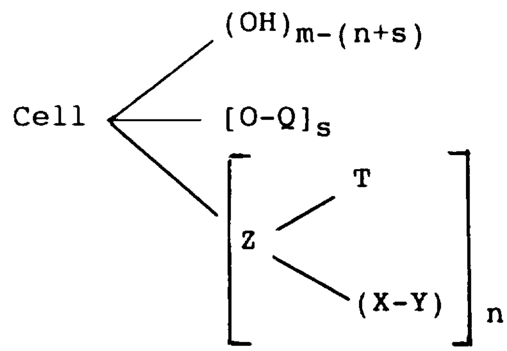

wiedergegebene Struktur aufweist, worin Cell das Gerüst des unmodifizierten Cellulosemoleküls oder des Chitinmoleküls jeweils ohne Hydroxylgruppen darstellt, Z ein Stickstoff- oder Schwefelatom ist, wobei für den Fall, daß Z ein Stickstoffatom ist, T und Z zusammen eine Acylamid- oder Harnstoffgruppe bilden, in der der Acylrest oder Amidrest T die Bedeutung des Acylrestes oder Amidrestes von Q hat, und für den Fall, daß Z ein Schwefelatom ist, T entfällt,

X einen geradkettigen oder verzweigten Alkylen- und/oder Alkenylenrest und/oder einen Cycloalkylen- und/oder Arylen- und/oder Arylalkylenrest darstellt, die gegebenenfalls substituiert sein können,
Y -H und/oder $-NR_2$ und/oder $-N^+R_3$ und/oder -COOR und/oder $-CO-NR_2$ und/oder -CO-R und/oder -CS-R und/oder $-SO_3R$ und/oder $-SO_2R$ und/oder $-SO_2NR_2$ und/oder -SR und/oder $-PO(OR)_2$ und/oder $-PO(NR)_2$ und/oder -CN und/oder -OR und/oder Halogen und/oder $-Si(OR)_3$ bedeuten, worin
R ein Wasserstoffatom und/oder eine geradkettige oder verzweigte Alkyl- und/oder Alkenylgruppe mit 1 bis 36 C-Atomen und/oder eine Cycloalkyl- und/oder Aryl- und/oder Arylalkylgruppe ist, wobei die genannten organischen Reste R gegebenenfalls substituiert sein können und bei R=H die unsubstituierte Säuregruppe in Y in den Fällen -COOH, $-SO_3H$ und $-PO_3H_2$ auch in Salzform vorliegen kann,
Q mindestens einen Acylrest der Formel -CO-R' und/oder Amidrest der Formel $-CO-NR'_2$ darstellt, die zusammen mit dem O des Cellulosemoleküls eine Ester- und/oder eine Carbamatgruppe bilden, worin
R' die gleiche Bedeutung wie R und/oder Y hat,
m beim unmodifizierten Cellulosemolekül 3 und beim Chitinmolekül 2 beträgt,

(n+s) den mittleren Substitutionsgrad angibt und für
n und s die Ungleichungen O < n < m und O < s < m gelten.

2. Modifizierte Cellulose nach Anspruch 1, dadurch gekennzeichnet, daß Z ein Stickstoffatom ist und S > O bis 0,5 n beträgt.

3. Modifizierte Cellulose nach Anspruch 1, dadurch gekennzeichnet, daß Z ein Schwefelatom ist und S = 0,25 n bis n beträgt.

4. Modifizierte Cellulose nach einem der Ansprüche 1 bis 3, dadurch gekennzeichnet, daß X mit den Molekülresten Y substituiert ist.

5. Modifizierte Cellulose nach einem oder mehreren der Ansprüche 1 bis 4, dadurch gekennzeichnet, daß die modifizierte Cellulose im Substituenten sekundäre, tertiäre, quaternäre Aminogruppen und/oder Carboxygruppen und/oder Sulfogruppen und/oder Phosphonatgruppen und/oder Silicatgruppen enthält.

6. Modifizierte Cellulose nach Anspruch 5, dadurch gekennzeichnet, daß -[ XY ] Dialkylaminoalkylen und/oder Carboxyalkylen und/oder Carboxyarylalkylen und/oder Sulfoalkylen und/oder Sulfoarylalkylen und/oder Phosphonatalkylen und/oder Phosphonatarylalkylen bedeutet.

**7.** Modifizierte Cellulose nach einem oder mehreren der Ansprüche 1 bis 4, dadurch gekennzeichnet, daß -[ XY ] Silicatopropylen bedeutet.

**8.** Modifizierte Cellulose nach einem oder mehreren der Ansprüche 1 bis 6, dadurch gekennzeichnet, daß die Alkylgruppen im Substituenten Methylgruppen und/oder Äthylgruppen und/oder Propylgruppen sind.

**Patentansprüche für folgenden Vertragsstaat : ES**

**1.** Verfahren zur Herstellung von biokompatiblen Dialysemembranen aus modifizierter Cellulose, dadurch gekennzeichnet, daß zur Bildung der Dialysemembranen eine modifizierte Cellulose eingesetzt wird, die eine durch die Formel

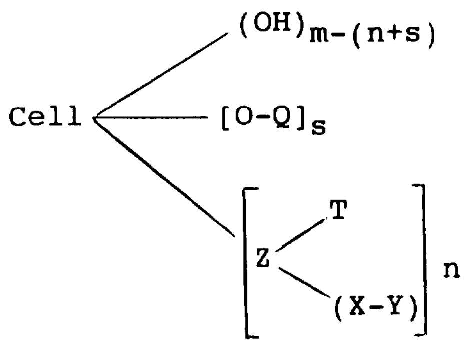

wiedergegebene Struktur aufweist, worin Cell das Gerüst des unmodifizierten Cellulosemoleküls oder des Chitinmoleküls jeweils ohne Hydroxylgruppen darstellt, Z ein Stickstoff- oder Schwefelatom ist, wobei für den Fall, daß Z ein Stickstoffatom ist, T und Z zusammen eine Acylamid- oder Harnstoffgruppe bilden, in der der Acylrest oder Amidrest T die Bedeutung des Acylrestes oder Amidrestes von Q hat, und für den Fall, daß Z ein Schwefelatom ist, T entfällt,

X einen geradkettigen oder verzweigten Alkylen- und/oder Alkenylenrest und/oder einen Cycloalkylen- und/oder Arylen- und/oder Arylalkylenrest darstellt, die gegebenenfalls substituiert sein können,

Y -H und/oder $-NR_2$ und/oder $-N^+R_3$ und/oder -COOR und/oder $-CO-NR_2$ und/oder -CO-R und/oder -CS-R und/oder $-SO_3R$ und/oder $-SO_2R$ und/oder $-SO_2NR_2$ und/oder -SR und/oder $-PO(OR)_2$ und/oder $-PO(NR)_2$ und/oder -CN und/oder -OR und/oder Halogen und/oder $-Si(OR)_3$ bedeuten, worin

R ein Wasserstoffatom und/oder eine geradkettige oder verzweigte Alkyl- und/oder Alkenylgruppe mit 1 bis 36 C-Atomen und/oder eine Cycloalkyl- und/oder Aryl- und /oder Arylalkylgruppe ist, wobei die genannten organischen Reste R gegebenenfalls substituiert sein können und bei R=H die unsubstituierte Säuregruppe in Y in den Fällen -COOH, $-SO_3H$ und $-PO_3H_2$ auch in Salzform vorliegen kann,

Q mindestens einen Acylrest der Formel -CO-R'und/oder Amidrest der Formel $-CO-NR'_2$ darstellt, die zusammen mit dem O des Cellulosemoleküls eine Ester- und/oder eine Carbamatgruppe bilden, worin

R' die gleiche Bedeutung wie R und/oder Y hat,

m beim unmodifizierten Cellulosemolekül 3 und beim Chitinmolekül 2 beträgt,

(n+s) den mittleren Substitutionsgrad angibt und für

n und s die Ungleichungen $0 < n < m$ und $0 < s < m$ gelten.

**2.** Verfahren nach Anspruch 1, dadurch gekennzeichnet, daß Z ein Stickstoffatom ist und s > 0 bis 0,5.n beträgt.

**3.** Verfahren nach Anspruch 1, dadurch gekennzeichnet, daß Z ein Schwefelatom ist und s = 0,25 n bis n beträgt.

**4.** Verfahren nach einem der Ansprüche 1 bis 3, dadurch gekennzeichnet, daß X mit den Molekülresten Y substituiert ist.

**5.** Verfahren nach einem oder mehreren der Ansprüche 1 bis 4, dadurch gekennzeichnet, daß die modifizierte Cellulose im Substituenten sekundäre, tertiäre, quaternäre Aminogruppen und/oder Carboxygruppen und/oder Sulfogruppen und/oder Phosphonatgruppen und/oder Silicatgruppen enthält.

6. Verfahren nach Anspruch 5, dadurch gekennzeichnet, daß -[ XY ] Dialkylaminoalkylen und/oder Carboxyalkylen und/oder Carboxyarylalkylen und/oder Sulfoalkylen und/oder Sulfoarylalkylen und/oder Phosphonatalkylen und/oder Phosphonatarylalkylen bedeutet.

7. Verfahren nach einem oder mehreren der Ansprüche 1 bis 4, dadurch gekennzeichnet, daß -[ XY ] Silicatopropylen bedeutet.

8. Verfahren nach einem oder mehreren der Ansprüche 1 bis 6, dadurch gekennzeichnet, daß die Alkylgruppen im Substituenten Methylgruppen und/oder Äthylgruppen und/oder Propylgruppen sind.

## Claims

### Claims for the following Contracting States : AT, BE, CH, DE, FR, GB, GR, IT, LI, LU, NL, SE

1. Modified cellulose, characterised in that it has a structure represented by the formula

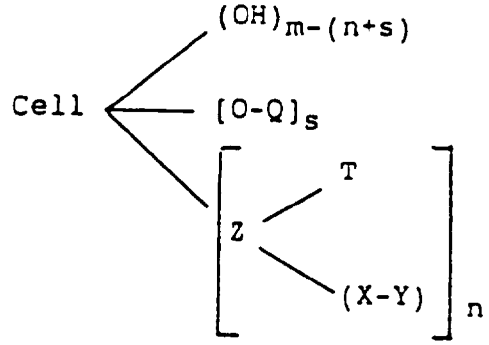

wherein Cell represents the skeleton of the unmodified cellulose molecule or of the chitin molecule, respectively without hydroxyl groups, Z is a nitrogen atom or sulphur atom, wherein in the event that Z is a nitrogen atom, T and Z together form an acylamide group or urea group wherein the acyl radical or amide radical T has the meaning of the acyl radical or amide radical represented by Q, and in the event that Z is a sulphur atom, T is omitted,

X represents a straight-chain or branched alkylene and/or alkenylene radical and/or a cycloalkylene and/or arylene and/or arylalkylene radical, which may optionally be substituted,

Y signifies -H and/or $-NR_2$ and/or $-N^+R_3$ and/or -COOR and/or $-CO-NR_2$ and/or -CO-R and/or -CS-R and/or $-SO_3R$ and/or $-SO_2R$ and/or $-SO_2NR_2$ and/or -SR and/or $-PO(OR)_2$ and/or $-PO(NR)_2$ and/or -CN and/or -OR and/or halogen and/or $-Si(OR)_3$, wherein

R is a hydrogen atom and/or a straight-chain or branched alkyl and/or alkenyl group having 1 to 36 C atoms and/or a cycloalkyl and/or aryl and/or arylalkyl group, wherein the said organic radical R may optionally be substituted and when R is H the unsubstituted acidic group in Y in the instances -COOH, $-SO_3H$ and $-PO_3H_2$ can also be present in salt form.

Q represents at least one acyl radical of the formula -CO-R' and/or amide radical of the formula $-CO-NR'_2$, which together with the O of the cellulose molecule form an ester group and/or a carbamate group, wherein

R' has the same meaning as R and/or Y,

m is 3 in the unmodified cellulose molecule and 2 in the chitin molecule

(n+s) gives the average degree of substitution and in respect of
n and s the inequalities $0 < n < m$ and $0 < s < m$ apply.

2. Modified cellulose according to claim 1, characterised in that Z is a nitrogen atom and s is > 0 to 0.5 n.

**3.** Modified cellulose according to claim 1, characterised in that Z is a sulphur atom and s equals 0.25 n to n.

**4.** Modified cellulose according to any one of claims 1 to 3, characterised in that X is substituted by the molecular radical Y.

**5.** Modified cellulose according to one or more of claims 1 to 4, characterised in that the modified cellulose contains in the substituent secondary, tertiary, quaternary amino groups and/or carboxy groups and/or sulpho groups and/or phosphonate groups and/or silicate groups.

**6.** Modified cellulose according to claim 5, characterised in that -[ XY ] signifies dialkylaminoalkylene and/or carboxyalkylene and/or carboxyarylalkylene and/or sulphoalkylene and/or sulphoarylalkylene and/or phosphonate alkylene and/or phosphonate arylalkylene.

**7.** Modified cellulose according to one or more of claims 1 to 4, characterised in that -[ XY ] signifies silicatopropylene.

**8.** Modified cellulose according to one or more of claims 1 to 6, characterised in that the alkyl groups in the substituent are methyl groups and/or ethyl groups and/or propyl groups.

**Claims for the following Contracting State : ES**

**1.** A process for the preparation of a biocompatible dialysis membrane of modified cellulose, characterised in that for the preparation of the dialysis membrane a modified cellulose is applied, which has a structure represented by the formula

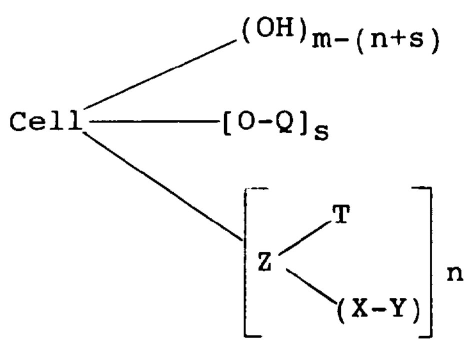

wherein Cell represents the skeleton of the unmodified cellulose molecule or of the chitin molecule, respectively without hydroxyl groups, Z is a nitrogen atom or sulphur atom, wherein in the event that Z is a nitrogen atom, T and Z together form an acylamide group or urea group wherein the acyl radical or amide radical T has the meaning of the acyl radical or amide radical represented by Q, and in the event that Z is a sulphur atom, T is omitted,

| | |
|---|---|
| X | represents a straight-chain or branched alkylene and/or alkenylene radical and/or a cycloalkylene and/or arylene and/or arylalkylene radical, which may optionally be substituted, |
| Y | signifies -H and/or $-NR_2$ and/or $-N^+R_3$ and/or -COOR and/or $-CO-NR_2$ and/or -CO-R and/or -CS-R and/or $-SO_3R$ and/or $-SO_2R$ and/or $-SO_2NR_2$ and/or -SR and/or $-PO(OR)_2$ and/or $-PO(NR)_2$ and/or -CN and/or -OR and/or halogen and/or $-Si(OR)_3$, wherein |
| R | is a hydrogen atom and/or a straight-chain or branched alkyl and/or alkenyl group having 1 to 36 C atoms and/or a cycloalkyl and/or aryl and/or arylalkyl group, wherein the said organic radical R may optionally be substituted and when R is H the unsubstituted acidic group in Y in the instances -COOH, $-SO_3H$ and $-PO_3H_2$ can also be present in salt form. |
| Q | represents at least one acyl radical of the formula -CO-R' and/or amide radical of the formula $-CO-NR'_2$, which together with the O of the cellulose molecule form an ester group and/or a carbamate group, wherein |
| R' | has the same meaning as R and/or Y, |
| m | is 3 in the unmodified cellulose molecule and 2 in the chitin molecule |
| (n+s) | gives the average degree of substitution and in respect of |
| n and s | the inequalities $0 < n < m$ and $0 < s < m$ apply. |

**2.** Process according to claim 1, characterised in that Z is a nitrogen atom and s is > 0 to 0.5 n.

**3.** Process according to claim 1, characterised in that Z is a sulphur atom and s equals 0.25 n to n.

**4.** Process according to any one of claims 1 to 3, characterised in that X is substituted by the molecular radical Y.

**5.** Process according to one or more of claims 1 to 4, characterised in that the modified cellulose contains in the substituent secondary, tertiary, quaternary amino groups and/or carboxy groups and/or sulpho groups and/or phosphonate groups and/or silicate groups.

**6.** Process according to claim 5, characterised in that -[ XY ] signifies dialkylaminoalkylene and/or carboxyalkylene and/or carboxyarylalkylene and/or sulphoalkylene and/or sulphoarylalkylene and/or phosphonate alkylene and/or phosphonate arylalkylene.

**7.** Process according to one or more of claims 1 to 4, characterised in that -[ XY ] signifies silicatopropylene.

**8.** Process according to one or more of claims 1 to 6, characterised in that the alkyl groups in the substituent are methyl groups and/or ethyl groups and/or propyl groups.

**Revendications**

**Revendications pour les Etats contractants suivants : AT, BE, CH, DE, FR, GB, GR, IT, LI, LU, NL, SE**

**1.** Cellulose modifiée, caractérisée en ce qu'elle présente la structure représentée par la formule

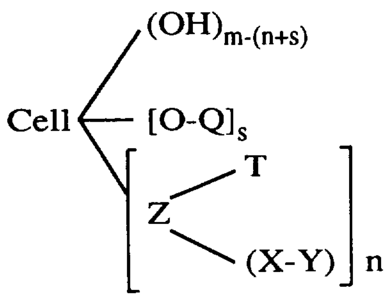

dans laquelle

Cell représente le squelette de la molécule de cellulose non modifiée ou de la molécule de chitine, non compris les groupes hydroxyle,

Z représente un atome d'azote ou de soufre, et dans le cas où Z représente un atome d'azote, T et Z forment ensemble un groupe acylamide ou urée dans lequel le résidu acyle ou amide T a la signification du résidu acyle ou amide Q, et dans le cas où Z est un atome de soufre, T est absent,

X représente un résidu alkylène et/ou alkénylène linéaires ou ramifiés et/ou un résidu cycloalkylène et/ou arylène et/ou arylalkyléne, tous pouvant éventuellement être substitués,

Y représente un résidu -H et/ou $-NR_2$ et/ou $-N^+R_3$ et/ou -COOR et/ou $-CO-NR_2$ et/ou -CO-R et/ou -CS-R et/ou-$SO_3R$ et/ou-$SO_2R$ et/ou $-SO_2NR_2$ et/ou -SR et/ou $-PO(OR)_2$ et/ou $-PO(NR)_2$ et/ou -CN et/ou -OR et/ou halogéno et/ou $-Si(OR)_3$, où

R représente un atome d'hydrogène et/ou un groupe alkyle et/ou alkylène linéaires ou ramifiés comportant de 1 à 36 atomes de carbone et/ou un groupe cycloalkyle et/ou aryle et/ou arylalkyle, ces résidus organiques R pouvant éventuellement être substitués, et lorsque R est une atome d'hydrogène, le groupe acide non substitué de Y peut être dans le cas de -COOH, $-SO_3H$ et $-PO_3H_2$ sous forme de sel,

Q représente au mois un résidu acyle de formule -CO-R' et/ou un résidu amide de formule $-CO-NR'_2$, qui forment avec l'atome d'oxygène de la molécule de cellulose un groupe ester et/ou carbamate,

R' a la même signification que R et/ou Y,

m vaut 3 pour la molécule de cellulose non modifiée et 2 pour la molécule de chitine,

(n+s) indique le taux de substitution moyen et pour n et s vaut l'inégalité 0 < n < m et O < s < m.

**2.** Cellulose modifiée conforme à la revendication 1, caractérisée en ce que Z est un atome d'azote et s > 0 à 0,5 n.

**3.** Cellulose modifiée conforme à la revendication 1, caractérisée en ce que Z est un atome de soufre et s = 0,25 n à n.

**4.** Cellulose modifiée conforme à une des revendications 1 à 3, caractérisée en ce que X porte, comme substituants, les résidus Y.

**5.** Cellulose modifiée conforme à une ou plusieurs des revendications 1 à 4, caractérisée en ce que la cellulose modifiée contient dans ses substituants des groupes amino secondaires, tertiaires, quaternaires et/ou des groupes carboxy et/ou sulfo et/ou phosphonate et/ou silicate.

**6.** Cellulose modifiée conforme à la revendication 5, caractérisée en ce que -[XY] représente un groupe dialkylaminoalkylène et/ou carboxyalkylène et/ou carboxyarylalkylène et/ou sulfoalkylène et/ou sulfoarylalkylène et/ou phosphonoalkylène et/ou phosphonoarylalkylène.

**7.** Cellulose modifiée conforme à une ou plusieurs des revendications 1 à 4, caractérisée en ce que -[XY] représente un groupe silicatopropylène.

**8.** Cellulose modifiée conforme à une ou plusieurs des revendications 1 à 6, caractérisée en ce que les groupes alkyle dans les substituants sont des groupes méthyle et/ou éthyle et/ou propyle.

**Revendications pour l'Etat contractant suivant : ES**

**1.** Procédé pour la fabrication d'une membrane de dialyse biocompatible en cellulose modifiée, caractérisé en ce que pour la fabrication de la membrane de dialyse une cellulose modifiée est employée laquelle présente la structure représentée par la formule

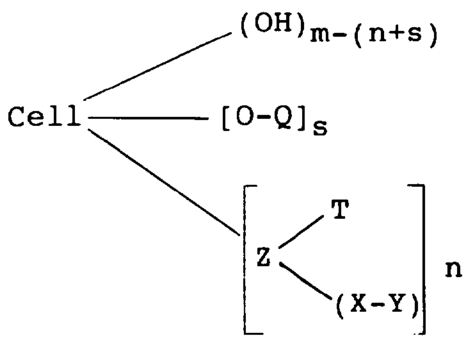

dans laquelle

| | |
|---|---|
| Cell | représente le squelette de la molécule de cellulose non modifiée ou de la molécule de chitine, non compris les groupes hydroxyle, |
| Z | représente un atome d'azote ou de soufre, et dans le cas où Z représente un atome d'azote, T et Z forment ensemble un groupe acylamide ou urée dans lequel le résidu acyle ou amide T a la signification du résidu acyle ou amide Q, et dans le cas où Z est un atome de soufre, T est absent, |
| X | représente un résidu alkylène et/ou alkénylène linéaires ou ramifiés et/ou un résidu cycloalkylène et/ou arylène et/ou arylalkylène, tous pouvant éventuellement être substitués, |
| Y | représente un résidu -H et/ou $-NR_2$ et/ou $-N^+R_3$ et/ou -COOR et/ou $-CO-NR_2$ et/ou -CO-R et/ou -CS-R et/ou $-SO_3R$ et/ou $-SO_2R$ et/ou $-SO_2NR_2$ et/ou -SR et/ou $-PO(OR)_2$ et/ou $-PO(NR)_2$ et/ou -CN et/ou -OR et/ou halogéno et/ou $-Si(OR)_3$, où |
| R | représente un atome d'hydrogène et/ou un groupe alkyle et/ou alkylène linéaire ou ramifiés comportant 1 à 36 atomes de carbone et/ou un groupe cycloalkyle et/ou aryle et/ou arylalkyle, ces résidus organique R pouvant éventuellement être substitués , et lorsque R est un atome d'hydrogène, le groupe acide non substitué de Y peut être dans le cas de -COOH, $-SO_3H$ et $-PO_3H_2$ sous forme de sel, |
| Q | représente au moins un résidu acyle de formule -CO-R' et/ou un résidu amide de formule $-CO-NR'_2$, qui forment avec l'atome d'oxygène de la molécule de cellulose un groupe ester et/ou carbamate, |
| R' | a la même signification que R et/ou Y, |

| | |
|---|---|
| m | vaut 3 pour la molécule de cellulose non modifiée et 2 pour la molécule de chitine, |
| (n+s) | indique le taux de substitution moyen et pour |
| n und s | vaut l'inégalité $0 < n < m$ et $0 < s < m$. |

**2.** Procédé conforme à la revendication 1, caractérisé en ce que Z est un atome d'azote et s > 0 à 0,5 n.

**3.** Procédé conforme à la revendication 1, caractérisé en ce que Z est un atome de soufre et s = 0,25 n à n.

**4.** Procédé conforme à une des revendication 1 à 3, caractérisé en ce que X porte, comme substituants, les résidus Y.

**5.** Procédé conforme à une ou plusieurs des revendications 1 à 4, caractérisé en ce que la cellulose modifiée contient dans ses substituants des groupes amino secondaires, tertiaires, quaternaires et/ou des groupes carboxy et/ou sulfo et/ou phosphonate et/ou silicate.

**6.** Procédé conforme à la revendication 5, caractérisé en ce que -[ XY ] représente un groupe dialkylaminoalkylène et/ou carboxyalkylène et/ou carboxyarylalkylène et/ou sulfoalkylène et/ou sulfoarylalkylène et/ou phosphonoalkylène et/ou phosphonoarylalkylène.

**7.** Procédé conforme à une ou plusieurs des revendications 1 à 4, caractérisé en ce que -[ XY ] représente un groupe silicatopropylène.

**8.** Procédé conforme à une ou plusieurs des revendications 1 à 6, caractérisé en ce que les groupes alkyle dans les substituants sont des groupes méthyle et/ou éthyle et/ou propyle.